# EUROPEAN PATENT SPECIFICATION

(11) **EP 3 076 510 B1**
(45) Date of publication and mention of the grant of the patent: **06.02.2019**
(21) Application number: 16163365.6
(22) Date of filing: 31.03.2016
(51) Int. Cl.: F16L 3/10, F16L 3/26, H02G 3/32

(54) **CABLE RESTRAINT SYSTEM**
KABELHALTESYSTEM
SYSTÈME DE RETENUE DE CÂBLE

(30) Priority: 31.03.2015 US 201514674281
(43) Date of publication of application: 05.10.2016
(73) Proprietor: Tektronix, Inc., Beaverton, Oregon 97077-0001 (US)
(72) Inventor: DUNN, Jessica, Beaverton, Oregon 97008 (US); LE MON, Lawrence, Beaverton, Oregon 97007 (US)
(74) Representative: HGF Limited

(56) References cited:
- EP-A1- 1 725 089
- WO-A1-2010/019816
- WO-A1-2011/034669
- US-A- 3 214 126
- US-A1- 2012 308 333
- US-A1- 2014 116 744

## Description

### BACKGROUND

High frequency cables are required to sample signals in the gigahertz range while testing equipment and devices. These high frequency cables are fragile and easily damaged, which results in the sampled signal being degraded or disrupted. Therefore, the cables are treated with the utmost care to ensure that the cable is not kinked or damaged. As the cost of these cables can be in the hundreds of dollars, it is not economically viable to be constantly replacing damaged cables.

The high frequency cables may be affixed to test probes and connected to test equipment, but the transmitted signal must also be routed through the device itself using the same kind of high frequency cable. There exists a delicate balance between protecting the internal cable(s) and packaging the test equipment within a housing. The cable(s) may snake between the various internal components to reach a termination point that may be located a circuitous path away from the probe connection. The cables are routed carefully through the housing to avoid kinking and damaging the cable on its path through the device.

Embodiments of the disclosed technology address these needs.

US 2014/0116744 relates to a system for managing a plurality of cables.

US 2012/0308333 relates to a fastener including an anchor configured to be inserted into an attaching hole formed in a panel.

WO 2011/034669 relates to a multi-piece snap-in fastener adapted to adjoin a surface element to a backing panel.

EP 1 724 089 relates to a clamp to be surface mounted on a printed circuit board with a clamp groove into which an optical fiber is inserted.

Document WO 2010/019816 discloses a cable organizer including an upper surface, a lower surface, multiple channels, and at least one side surface.

Document US 3214126 discloses a support for such electrical fixtures as outlet boxes, junction boxes, or the like.

### SUMMARY

Aspects and embodiments of the invention are set out in the appended claims.

### BRIEF DESCRIPTION OF THE DRAWINGS

FIG. 1 is an exploded perspective view of an embodiment of the cable restraint device.
FIG. 2 is a perspective view of the base plate used in conjunction with the cable restraint device of FIG. 1.
FIG. 3A is a top view of multiple cable restraint devices installed on a base plate.
FIG. 3B is a side view of the embodiment of FIG. 3A.
FIG. 4 is an enlarged perspective view of the base piece of the cable restraint device of FIG. 1.
FIG. 5 is a perspective view of the flexible pad of the cable restraint device of FIG. 1.
FIG. 6 is a perspective view of the top piece of the cable restraint device of FIG. 1.

### DETAILED DESCRIPTION

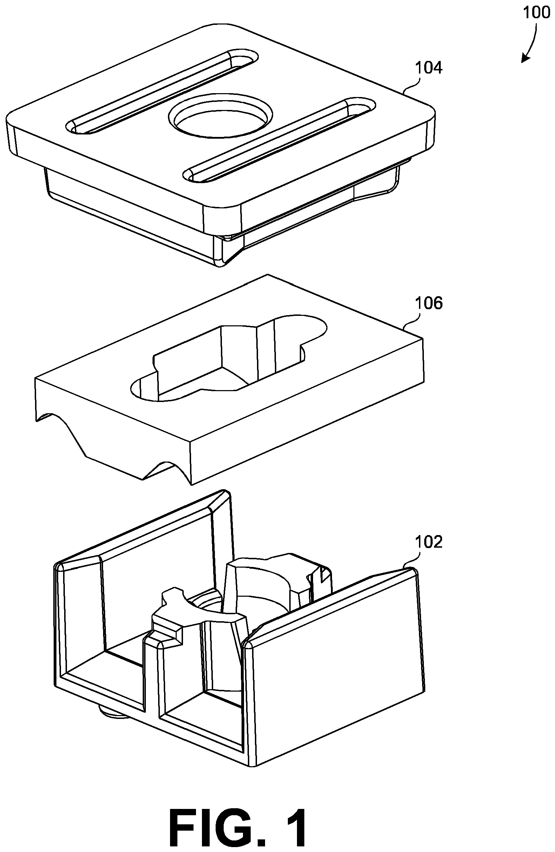

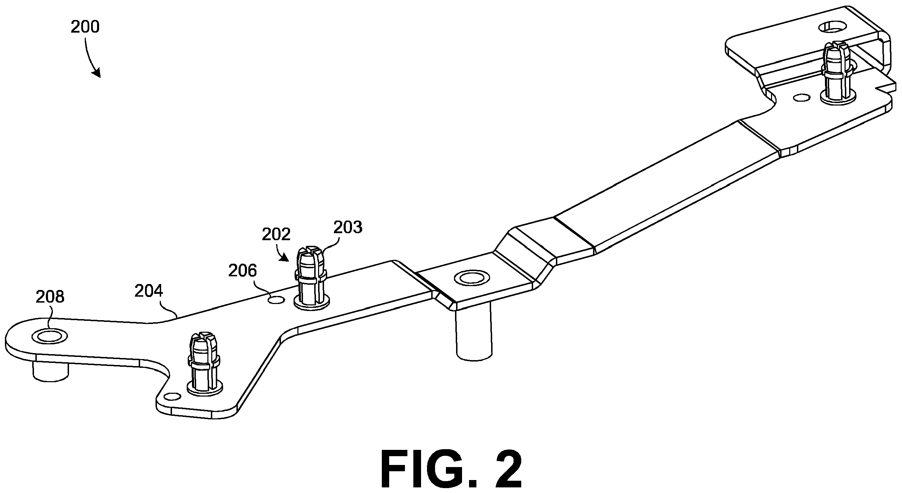

The high frequency cable restraint device 100, shown in FIG. 1, comprises a base portion 102, a top portion 104 and a flexible insert 106. The device 100 is mounted on a device base 200 shown in FIG. 2. The device base 200 features one or more mounting posts 202, to mount the device 100 to the device base 200. The one or more mounting posts 202 are secured to the base plate 204. The base portion 102 of the device 100 fits over the mounting post 202 and the top portion 104 mounts to the mounting post 202, restraining the cable restraint device 100 to the device base 200.

The mounting posts 202 may be a stud featuring a flared end 203 that engages with and retains the restraint device 100. Disposed in a pattern, multiple mounting posts positioned along the base plate 204 lay out a trace for the cables to follow. The pre-laid trace pattern assists in ensuring that the curve radii are sufficient to prevent damage to the cable while it is routed over a substrate, such as being routed through the housing of test equipment.

In the embodiment of the device base 200 shown in FIG. 2, the base plate 204 and the mounting posts 202 are preferably made of metal. The mounting posts 202 are individual components that are affixed to the base plate 204 to form the device base 200. In the example shown, the mounting posts 202 are riveted to the base plate 204. Alternatively, the mounting posts 202 can be affixed to the base plate 204 using other fasteners, such as nut and bolt, adhesive, welding or soldering. The device base 200, including the mounting posts 202 and the base plate 204, can be formed as a single unit by casting, machining or other methods.

Both the base plate 204 and mounting post 202 may be made of any other suitable materials. Such materials include plastics, composites or ceramics. The use of other materials can be considered when taking into consideration the environment in which the cables will be placed. Insulative materials, such as plastic, can be used to electrically isolate the cables. Additional considerations such as cost and manufacturability can also be considered when selecting the material.

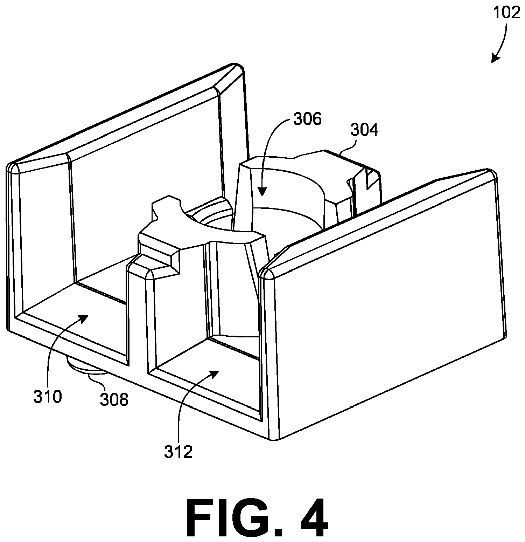

Locating holes 206 are disposed near the mounting posts 202 positions on the base plate 204. The locating holes 206 receive and engage the protrusions 308 on the base portions 102, as seen in FIG. 4 and discussed in more detail below. The engagement of the protrusions 308 and locating holes 206 assist in maintaining the orientation of the restraint devices 100 along the length of the device base 200.

The base plate 204 further features holes 208 disposed along its length through which the device base 200 may be mounted to supports or a substrate. Alternatively, the device base 200 may be affixed in place using an adhesive or any other suitable attachment means.

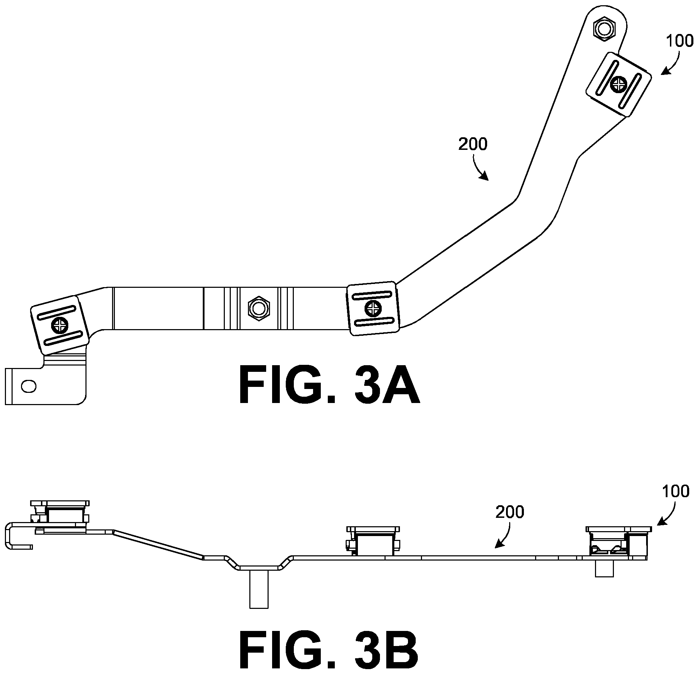

FIG. 3A is a top view of multiple cable restraint devices 100 installed on a base plate such as the base plate 204 of device base 200. FIG. 3B is a side view of the embodiment of FIG. 3A.

The base portion 102 of the device 100, as shown in FIG. 4, is preferably constructed of plastic using an injection moulding process. Alternatively, the base portion 102 can be made of other suitable materials, such as a ceramic, metallic, rubber or other plastic material.

A central mounting column 304, having a central mounting hole 306, is disposed approximately in the center of the base portion 102. The mounting column 304 receives and slides over the mounting post 202 through the mounting hole 306. The mounting column 304 is structured to engage with a flared portion 203 of the mounting post 202. The flared portion lightly restrains the base portion 102 to the device base 200. Alternatively, the mounting column 304 may have a friction fit with the mounting post 202 to restrain the base portion 102. In another embodiment, the mounting column 304 may slide loosely over the mounting post 202 and not actively engage with the one or more mounting posts 202. In a further embodiment, the mounting column 304 can feature internal fins that engage with the mounting post 202. These fins can be deformed, elastically or plastically, such that they exert a pressure on the mounting post 202, restraining the base portion 102 to the mounting post 202.

In an alternative embodiment, the base portion 102 of the device 100 may be retained in a position by an adhesive. The adhesive, such as glue, can be placed in the location (e.g. on the device base 200 where the device 100 will be located), with the base portion 102 then being affixed. Alternatively, the base portion 102 may have an adhesive layer disposed on its underside to similar effect. A protective sheet covers the adhesive and when removed the adhesive is exposed and the base portion 102 can be pressed into the desired position.

In a further embodiment, the base portion 102 may be mounted using a screw or nail. The screw or nail may be driven through the mounting column 304 into a substrate, such as the device base 200 or directly into a housing. The screw or nail can affix the base portion 102 only or can be driven through the top portion 104, as well, thus securing the entire restraint device 100 to the desired position.

The high frequency cables run through the base portion 102 in channels 310 and 312. These channels provide guides for the cables as they are run through the base portion 102. The channels 310 and 312 do not exert any force on the cables and do not engage the cables to restrain them. This prevents undue pressure being exerted on the cables, which can damage them.

The channels 310 and 312 may be lined with cushioning material, such as a rubber or foam, to further protect the cables. The addition of such protection can also help isolate the cables from vibrations which can wear the cables should they rub against the base portion 102.

Alternatively, the base portion 102 can feature a flat base, lacking the mounting column 304 and the channels 310 and 312, but featuring the mounting hole 306. The base portion 102 slides over the mounting post 202 through the mounting hole 306. An insert can then be slid over the mounting post 202. The insert can feature a mounting column to space the base portion 102 and the top portion 104 and a central portion that creates channels by dividing the base portion 102.

The base portion 102 features a protrusion 308 located on a bottom surface. The protrusion 308 engages with a hole 206 in the base plate 204 of the device base 200, as mentioned above. The hole 206 locates and orients the base portion 102 on the device base 200. With the protrusion 308 engaged with the hole 206, the base portion 102 is prevented from rotating about the mounting post 202.

In an embodiment, ridges or protrusions formed on the upper portion of the sidewalls of the base portion 102 engage with the top portion 104. When the top portion 104 is pressed into the base portion 102, the two pieces engage and lock together forming the restraint device 100.

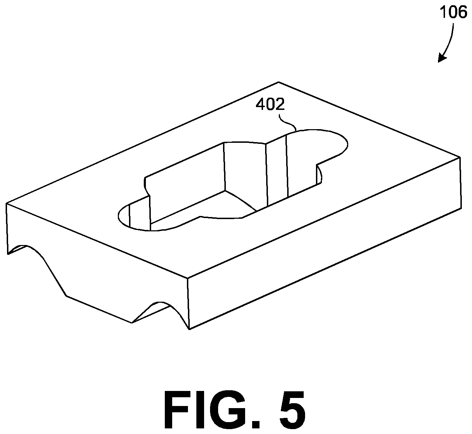

A flexible insert 106, as shown in FIG. 5, is disposed atop the cables running through the base portion 102. The flexible insert 106 is sized to fit within the base portion 102 and features a slit 402 that allows the pad to slide over and around the mounting column 304. The flexible insert 106 is space-filling between the cables, base portion 102 and top portion 104. While the flexible insert 106 is compressed by the top portion 104, the pressure exerted on the wires through the flexible insert 106 is minimal and below the damage threshold. The slight pressure exerted by the flexible insert 106 on the wires prevents them from slipping or sliding through the restraint device 100. In preventing this, undue damage to the cable wrapping and/or the cable itself can be prevented. Additionally, the slight pressure assists in ensuring that a steady or constant tension can be maintained on the cables as desired or necessary to ensure proper cable performance.

The flexible insert 106 may be composed of a number of suitable materials, such as rubber, latex, high and low density foam, or any other polymer. The flexible insert 106 material is selected to evenly distribute and minimize the force exerted on the cables from the closure of the top portion 104 to the base portion 102.

The flexible insert 106 may be sculpted to further contour to the cables. Contouring the flexible insert 106 lessens the amount of pressure exerted on the cables and further distribute the exerted force evenly.

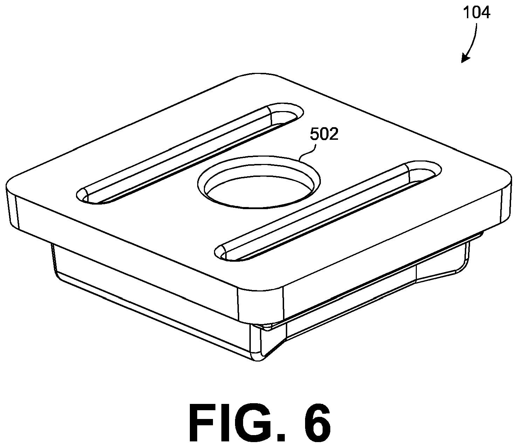

FIG. 6 illustrates an embodiment of the top portion 104 of the device 100. The top portion 104 covers the base portion 102, the flexible insert 106 and features a central hole 502. When locked to the base portion 102, by the mounting post 202 engagement with the central hole 502, the top portion 104 lightly compresses the flexible insert 106, exerting a pressure on the cables. The pressure is low enough to not damage the cables but is sufficient to slightly restrain the cables from sliding through the restraint device 100.

To retain the top portion 104 to the base portion 102, the mounting post 202 of the device base 200 has a flared end 203 that engages the central hole 502 of the top portion 104. The engagement between the central hole 502 and the mounting post 202 is a friction fit sufficient to lock the top portion 104 to the mounting post 202. The friction fit can be overcome by a user so that access can be gained to the cables running internal through the restrain device 100. Additionally, a "click" type friction fit allows the device 100 to be opened and closed repeatedly and reused if so desired.

In an alternate embodiment, as discussed above, a screw or other fastener can be used to affix the device 100. The fastener is driven through the central hole 502 of the top portion 104, through the central column 304 of the base portion 102 and into a substrate to affix the device in a desired location. Alternatively, the base portion 102 can be affixed in a position using an attachment means, with the top portion 104 attached to the base portion 102 by a fastener.

In another embodiment, the flexible insert 106 may be integrated with the top portion 104. This eliminates placing the flexible insert 106 in the device 100 before placing the top portion 104.

Further means of attaching the top portion 104 on the base portion 102 may include using an adhesive. The top portion 104 may be glued or sealed onto the base portion 102 to prevent access to the cables, which may be desirable in some situations. The top portion 104 may also be taped to the base portion 102. Laying tape across the top portion 104 additionally provides a tamper indication whereby a person attempting to access the cables within the restraint device 100 would have to break the tape seal. The broken tape provides an indication to service technicians or users that a person may have interacted with the restrained cables, thereby potentially damaging them.

In an alternative embodiment of the restraint device, the entire device may be integrated with the substrate. A channel through which the cables are routed is disposed on or within the substrate. The channel features mounting posts disposed along the length. Top pieces engage with the mounting posts, as in the previous embodiments, to restrain the cables within the channel. A flexible insert is disposed between the cables and each of the top pieces. Alternatively, a single top piece may be disposed across the whole length of the channel. The full-length top piece also has a flexible insert disposed between it and the cables to restrain them.

To use the cable restraint device 100, the base portion 102 is first placed over the mounting post 202 disposed on a base plate 204 of the device base 200. The protrusion 308 of the base portion 102 engages the locating hole 206 on the base plate 204. The engagement of the locating hole 206 and protrusion 308 combined with the engagement between the mounting post 202 and mounting column 304 moderately restrain the base portion 102 to the device base 200. The cables are placed in the channels, 310 and 312, and then the flexible insert 106 is placed over them. With the flexible insert 106 in place, the top portion 104 is secured to the mounting post 202 thereby completing the restraint device 100 and locking the device 100 firmly to the device base 200.

Examples provide a cable restraint system, comprising a device base, including a base plate and at least one mounting post disposed thereon, and a cable restraint device, including a base portion having at least one mounting column structured to receive the at least one mounting post, a pair of opposed sidewalls defining a trough structured to receive at least one cable, a flexible insert received in the base portion and disposed between the sidewalls, and a top portion spanning the sidewalls to retain the flexible insert within the base portion and structured to engage the at least one mounting post.

Some examples further comprise at least one locating hole disposed on the base plate and proximate to the at least one mounting post.

In some examples the base portion of the cable restraint device further includes a protrusion disposed on a lower surface and structured to engage the at least one locating hole.

In some examples the top portion features an opening structured to engage the at least one mounting post, the engagement releasably securing the top portion to the at least one mounting post.

In some examples the at least one mounting post features a flared end structured to engage with the opening of the top portion.

In some examples the base is attached to a substrate.

In some examples the base is integrated into the substrate.

In some examples, the base portion of the cable restraint device includes at least one channel disposed on a lower surface of the trough, the at least one channel structured to receive a cable.

In some examples the flexible insert is composed of a polymer.

In some examples the flexible insert has a contoured profile.

In some examples the top portion includes a central opening.

In some examples the top portion is structured to engage with the base portion of the cable restraint device.

In some examples the cable restraint device is disposed along an entire length of the base.

In some examples a plurality of cable restraint devices are disposed along the base.

Some examples further include a housing, wherein the base portion and the cable restraint device are structured to be mounted in the housing.

Having described and illustrated the principles of the disclosed technology in a preferred embodiment thereof, it should be apparent that the disclosed technology can be modified in arrangement and detail without departing from such principles. We claim all modifications and variations coming within the scope of the following claims.

## Claims

1. A cable restraint system to route a cable through a test instrument housing, comprising:
a device base (200), including:
a base plate (204) having a locating hole formed therein; and
at least one mounting post (202) disposed on the base plate (204); and
a cable restraint device (100) configured to route the cable through the test instrument housing to a termination point, the cable restraint device including:
a base portion (102) having at least one mounting column structured to receive the at least one mounting post (202), a pair of opposed sidewalls defining a trough structured to receive the cable, and a protrusion structured to engage the locating hole to maintain an orientation of the cable restraint device (100) with respect to the device base;
a flexible insert (106) received in the base portion (102) and disposed between the pair of opposed sidewalls; and
a top portion (104) structured to span the pair of opposed sidewalls to retain the flexible insert (106) within the base portion (102) and structured to engage the at least one mounting post (202), wherein the top portion (104) lightly compresses the flexible insert (106), exerting a pressure on the cables, when the top portion (104) is locked to the base portion (102) by the mounting column (202) engaging with the central hole (502).

2. The cable restraint system of claim 1, wherein the top portion (104) features an opening structured to engage the at least one mounting post (202), the engagement releasably securing the top portion (104) to the at least one mounting post (202).

3. The cable restraint system of claim 2, wherein the at least one mounting post (202) features a flared end structured to engage with the opening of the top portion (104).

4. The cable restraint system of any preceding claim, wherein the device base (200) is attached to a substrate.

5. The cable restraint system of claim 4, wherein the device base (200) is integrated into the substrate.

6. The cable restraint system of any preceding claim, wherein the base portion (102) of the cable restraint device (100) includes at least one channel disposed on a lower surface of the trough, the at least one channel structured to receive the cable.

7. The cable restraint system of any preceding claim, wherein the flexible insert (106) is composed of a polymer.

8. The cable restraint system of any preceding claim, wherein the flexible insert (106) has a contoured profile.

9. The cable restraint system of any preceding claim, wherein the top portion (104) includes a central opening.

10. The cable restraint system of any preceding claim, wherein the top portion (104) is structured to engage with the base portion (102) of the cable restraint device (100).

11. The cable restraint system of any preceding claim, wherein the cable restraint device (100) is disposed along an entire length of the device base (200).

12. The cable restraint system of any preceding claim, wherein a plurality of cable restraint devices (100) are disposed along the device base (200).

13. The cable restraint system of any preceding claim, further including a housing, wherein the base portion (102) and the cable restraint device (100) are structured to be mounted in the housing.

## Patentansprüche

1. Kabelhaltesystem zum Leiten eines Kabels durch ein Testinstrumentgehäuse, umfassend:
eine Vorrichtungsbasis (200), enthaltend:
eine Basisplatte (204) mit einem darin geformten Lokalisierungsloch; und mindestens einen Montagemast (202), der auf der Basisplatte (204) angeordnet ist; und eine Kabelhaltevorrichtung (100), die konfiguriert ist, um das Kabel durch das Testinstrumentgehäuse zu einem Abschlusspunkt zu leiten, wobei die Kabelhaltevorrichtung enthält:
einen Basisabschnitt (102) mit mindestens einer Montagesäule, die strukturiert ist, um den mindestens einen Montagepfosten (202) aufzunehmen, ein Paar gegenüberliegender Seitenwände, die einen Trog definieren, der strukturiert ist, um das Kabel aufzunehmen, und einen Vorsprung, der strukturiert ist, um das Lokalisierungsloch in Eingriff zu nehmen, um eine Ausrichtung der Kabelhaltevorrichtung (100) bezüglich der Vorrichtungsbasis beizubehalten;
einen flexiblen Einsatz (106), der im Basisabschnitt (102) aufgenommen und zwischen dem Paar gegenüberliegender Seitenwände angeordnet ist;
und einen oberen Abschnitt (104), der strukturiert ist, um das Paar gegenüberliegender Seitenwände zu umspannen, um den flexiblen Einsatz (106) im Basisabschnitt (102) zu halten, und der strukturiert ist, um den mindestens einen Montagepfosten (202) in Eingriff zu nehmen,
wobei der obere Abschnitt (104) den flexiblen Einsatz (106) leicht komprimiert, wobei er einen Druck auf die Kabel ausübt, wenn der obere Abschnitt (104) dadurch, dass die Montagesäule (202) das zentrale Loch (502) in Eingriff nimmt, mit dem Basisabschnitt (102) verriegelt wird.

2. Kabelhaltesystem nach Anspruch 1, wobei der obere Abschnitt (104) eine Öffnung aufweist, die strukturiert ist, um den mindestens einen Montagepfosten (202) in Eingriff zu nehmen, wobei die Ineingriffnahme den oberen Abschnitt (104) lösbar am mindestens einen Montagepfosten (202) befestigt.

3. Kabelhaltesystem nach Anspruch 2, wobei der mindestens eine Montagepfosten (202) ein ausgestelltes Ende aufweist, das strukturiert ist, um die Öffnung des oberen Abschnitts (104) in Eingriff zu nehmen.

4. Kabelhaltesystem nach einem der vorstehenden Ansprüche, wobei die Vorrichtungsbasis (200) an einem Substrat angebracht ist.

5. Kabelhaltesystem nach Anspruch 4, wobei die Vorrichtungsbasis (200) in das Substrat integriert ist.

6. Kabelhaltesystem nach einem der vorstehenden Ansprüche, wobei der Basisabschnitt (102) der Kabelhaltevorrichtung (100) mindestens einen auf einer unteren Oberfläche des Trogs angeordneten Kanal enthält, wobei der mindestens eine Kanal strukturiert ist, um das Kabel aufzunehmen.

7. Kabelhaltesystem nach einem der vorstehenden Ansprüche, wobei der flexible Einsatz (106) aus einem Polymer besteht.

8. Kabelhaltesystem nach einem der vorstehenden Ansprüche, wobei der flexible Einsatz (106) ein konturiertes Profil aufweist.

9. Kabelhaltesystem nach einem der vorstehenden Ansprüche, wobei der obere Abschnitt (104) eine zentrale Öffnung enthält.

10. Kabelhaltesystem nach einem der vorstehenden Ansprüche, wobei der obere Abschnitt (104) strukturiert ist, um den Basisabschnitt (102) der Kabelhaltevorrichtung (100) in Eingriff zu nehmen.

11. Kabelhaltesystem nach einem der vorstehenden Ansprüche, wobei die Kabelhaltevorrichtung (100) entlang einer gesamten Länge der Vorrichtungsbasis (200) angeordnet ist.

12. Kabelhaltesystem nach einem der vorstehenden Ansprüche, wobei eine Vielzahl von Kabelhaltevorrichtungen (100) entlang der Vorrichtungsbasis (200) angeordnet ist.

13. Kabelhaltesystem nach einem der vorstehenden Ansprüche, ferner enthaltend ein Gehäuse, wobei der Basisabschnitt (102) und die Kabelhaltevorrichtung (100) strukturiert sind, um im Gehäuse montiert zu werden.

## Revendications

1. Système de retenue de câble pour acheminer un câble à travers un boîtier d'instrument d'essai, comprenant :
une base de dispositif (200) comprenant :
une plaque de base (204) possédant un trou de positionnement formé dans celle-ci ; et au moins un montant de montage (202) disposé sur la plaque de base (204) : et un dispositif de retenue de câble (100) conçu pour acheminer le câble à travers le boîtier d'instrument d'essai jusqu'à un point de terminaison, le dispositif de câble restreint comprenant :
un partie base (102) possédant au moins une colonne de montage structurée pour recevoir le au moins un montant de montage (202), une paire de parois latérales opposées définissant une goulotte structurée pour recevoir le câble, et une saillie structurée pour se mettre en prise avec le trou de positionnement afin de maintenir une orientation du dispositif de retenue de câble (100) par rapport à la base de dispositif ;
un insert souple (106) reçu dans la partie base (102) et disposé entre la paire de parois latérales opposées ;
et une partie supérieure (104) structurée pour couvrir la paire de parois latérales opposées pour retenir l'insert souple (106) dans la partie base (102) et structurée pour se mettre en prise avec le au moins un montant de montage (202), ladite partie supérieure (104) comprimant légèrement l'insert souple (106), exerçant une pression sur les câbles, lorsque la partie supérieur (104) est verrouillée à la partie base (102) par la colonne de montage (202) venant en prise avec le trou central (502).

2. Système de câble de retenue selon la revendication 1, ladite partie supérieure (104) présentant une ouverture structurée pour se mettre en prise avec le au moins un montant de montage (202), la mise en prise fixant de manière libérable la partie supérieure (104) au au moins un montant de montage (202).

3. Système de retenue de câble selon la revendication 2, ledit au moins un montant de montage (202) présentant une extrémité évasée structurée pour se mettre en prise avec l'ouverture de la partie supérieure (104).

4. Système de retenue de câble selon l'une quelconque des revendications précédentes, ladite base de dispositif (200) étant attachée à un substrat.

5. Système de retenue de câble selon la revendication 4, ladite base de dispositif (200) étant intégré dans le substrat.

6. Système de retenue de câble selon l'une quelconque des revendications précédentes, ladite partie base (102) du dispositif de retenue de câble (100) comprenant au moins un canal disposé sur une surface inférieure de la goulotte, ledit au moins un canal étant structuré pour recevoir le câble.

7. Système de retenue de câble selon l'une quelconque des revendications précédentes, ledit insert souple (106) étant composé d'un polymère.

8. Système de retenue de câble selon l'une quelconque des revendications précédentes, ledit insert souple (106) possédant un profil morphologique.

9. Système de retenue de câble selon l'une quelconque des revendications précédentes, ladite partie supérieure (104) comprenant une ouverture centrale.

10. Système de retenue de câble selon l'une quelconque des revendications précédentes, ladite partie supérieure (104) étant structurée pour se mettre en prise avec la partie base (102) du dispositif de retenue de câble (100).

11. Système de retenue de câble selon l'une quelconque des revendications précédentes, ledit dispositif de retenue de câble (100) étant disposé le long de toute la longueur de la base de dispositif (200).

12. Système de retenue de câble selon l'une quelconque des revendications précédentes, une pluralité de dispositifs de retenue de câble (100) étant disposés le long de la base de dispositif (200).

13. Système de retenue de câble selon l'une quelconque des revendications précédentes, comprenant en outre un boîtier, ladite partie base (102) et ledit dispositif de retenue de câble (100) étant structurés pour être montés dans le boîtier.
